Europäisches Patentamt

European Patent Office

Office européen des brevets

(19)

(11) Veröffentlichungsnummer: **0 138 172**
**A2**

(12) **EUROPÄISCHE PATENTANMELDUNG**

(21) Anmeldenummer: **84111983.7**

(22) Anmeldetag: **05.10.84**

(51) Int. Cl.⁴: **B 65 B 57/00,** F 16 P 3/02,
B 65 G 43/00

(30) Priorität: **14.10.83 DE 3337459**

(43) Veröffentlichungstag der Anmeldung: **24.04.85**
**Patentblatt 85/17**

(84) Benannte Vertragsstaaten: **CH FR GB LI SE**

(71) Anmelder: **MULTIVAC SEPP HAGGENMÜLLER KG,
D-8941 Wolfertschwenden (DE)**

(72) Erfinder: **Natterer, Johann, Römerweg 6, D-8945 Legau
(DE)**
Erfinder: **Franz, Dolf, Schmelzerweg 13a,
D-8950 Kaufbeuren (DE)**

(74) Vertreter: **Prüfer, Lutz H., Dipl.-Phys., Harthauser
Strasse 25d, D-8000 München 90 (DE)**

(54) **Verpackungsmaschine.**

(57)   Es wird eine Verpackungsmaschine (1) mit einem Transportkanal (2) für eine Materialbahn (3, 4), eine am Transportkanal (2) angeordnete Bearbeitungsstation (7, 8, 9, 10) mit einer
Einlauf- und Auslaufseite der Materialbahn und einer Schutzeinrichtung (13) mit einem die Auslaufseite der Station (7, 8, 9,
10) gegen Hineingreifen sperrenden Element (14) geschaffen.
Damit ein Hineingreifen in die Bearbeitungsstation vom offenen Ende (12) des Transportkanales (2) her auch bei Behältern, die zwischen ihrem Boden und dem Boden (16) des
Transportkanales einen genügend großen Spalt freilassen, unmöglich ist, ist das Element (14) unterhalb des Transportkanales (2) angelenkt, und es ist eine Ausrichtvorrichtung (26) vorgesehen, die das Element auslenkbar in einer solchen Lage
hält, daß sich ein Bereich (17) des Elementes (14) von unten in
den Transportkanal (2) hineinerstreckt.

Verpackungsmaschine

Die Erfindung betrifft eine Verpackungsmaschine nach dem Oberbegriff des Anspruches 1.

Bei einer solchen Verpackungsmaschine wird die Materialbahn mit einer oder mehreren Packungen nebeneinander durch die Arbeitsstationen hindurchgeführt. Dabei werden Arbeitsstationen wie eine Tiefzieheinrichtung oder eine Versiegelungseinrichtung während des Arbeitsablaufes jeweils kurzzeitig geschlossen und dann so weit geöffnet, daß die Packungen auslaufseitig aus der Arbeitsstation herausgeführt werden können. Am Ende der Verpackungsmaschine wird die Materialbahn mit den Packungen dann durch eine Querschneideeinrichtung und Längsschneideeinrichtung geführt, wobei diese Stationen im Bereich der Messer einen Öffnungsbereich aufweisen, durch den die Materialbahn mit den Verpackungen hindurchgeführt wird. Es gibt Fälle, in denen die durchgeführte Materialbahn keine Packungen aufweist oder in denen die Maschine ohne hindurchgeführte Materialbahn läuft oder in denen die Packungen so asymmetrisch ausgerichtet sind, daß nicht der ganze Öffnungsbereich ausgefüllt ist. In diesen Fällen besteht die Möglichkeit, in die Arbeitsstationen durch den Öffnungsbereich hineinzugreifen.

Aus der DE-PS 30 10 657 ist eine Verpackungsmaschine nach

0138172

dem Oberbegriff bekannt, die eine Schutzeinrichtung aufweist, mit der ein Hineingreifen in eine Arbeitsstation dann vermieden werden soll, wenn der Öffnungsbereich sich oberhalb einer Materialbahn befindet. Die Schutzeinrichtung ist aber nicht dazu geeignet, das Hineingreifen in einen Öffnungsbereich zu verhindern, der sich unterhalb einer Materialbahn befindet. Der Öffnungsbereich befindet sich aber immer dann unterhalb der Materialbahn, wenn die Packungen auf der Unterseite der Materialbahn hervorstehend ausgebildet sind.

Es ist daher Aufgabe der Erfindung, eine Verpackungsmaschine der eingangs beschriebenen Art zu schaffen, die einen Schutz gegen Hineingreifen in eine Bearbeitungsstation auch dann bietet, wenn ein Öffnungsbereich einer solchen Station sich unterhalb einer Materialbahn befindet.

Diese Aufgabe wird durch eine Verpackungsmaschine der eingangs beschriebenen Art gelöst, die gemäß der Erfindung gekennzeichnet ist durch die Merkmale des kennzeichnenden Teiles des Anspruches 1.

Weitere Merkmale und Zweckmäßigkeiten der Erfindung ergeben sich aus der Beschreibung von Ausführungsbeispielen der Erfindung im Zusammenhang mit den Figuren. Von den Figuren zeigen:

Fig. 1   eine schematische Seitenansicht einer erfindungsgemäßen Verpackungsmaschine;

Fig. 2   eine Ansicht eines Teiles der Verpackungsmaschine in vergrößertem Maßstab und schematischer Darstellung;

Fig. 3   einen Schnitt entlang der Linie III-III in Fig. 2;

- 3 -

0138172

Fig. 4 eine abgewandelte Ausführungsform in einer Darstellung entsprechend der in Fig. 3 gezeigten Darstellung;

und

Fig. 5 eine vergrößerte perspektivische Darstellung einer Ausführungsform der Schutzeinrichtung.

Die Verpackungsmaschine 1 weist einen Rahmen 30 mit zwei Seitenwänden 31, 32 auf, welcher in bekannter Weise eine Tiefziehstation 7, eine Evakuier- und Versiegelunsstation 8, eine Querschneideeinrichtung 9 und eine Längsschneideeinrichtung 10 aufweist. Eingangsseitig vor der Tiefziehstation 7 ist eine Vorratsrolle 5 mit einer Materialbahn 3 angebracht. An den Seitenwänden 31, 32 sind in bekannter Weise Transporteinrichtungen in Form von Greiferketten 33, 34 vorgesehen, die die Materialbahn von der Vorratsrolle 5 ergreifen und durch die Arbeitsstationen hindurch zum gegenüberliegenden ausgangsseitigen Ende der Verpackungsmaschine führen. In diese werden zu verpackende Gegenstände eingelegt. Vor der Evakuier- und Versiegelungsstation 8 wird über die Behältnisse eine Oberfolie 4 von einer Vorratsrolle 6 zugeführt. Die so abgedeckte Verpackung wird in der Evakuier- und Versiegelungsstation 8 versiegelt bzw. verschweißt. In den Schneideeinrichtungen 9 und 10 werden die Packungen dann in Längsrichtung und Querrichtung voneinander getrennt. Die Arbeitsstationen 7 und 8 bestehen jeweils aus einem Oberwerkzeug und in Richtung der Pfeile 35, 36 hin- und herbewegbarer Unterteile zum Schließen der Station bzw. Öffnen für den Weitertransport der Behälter 11.

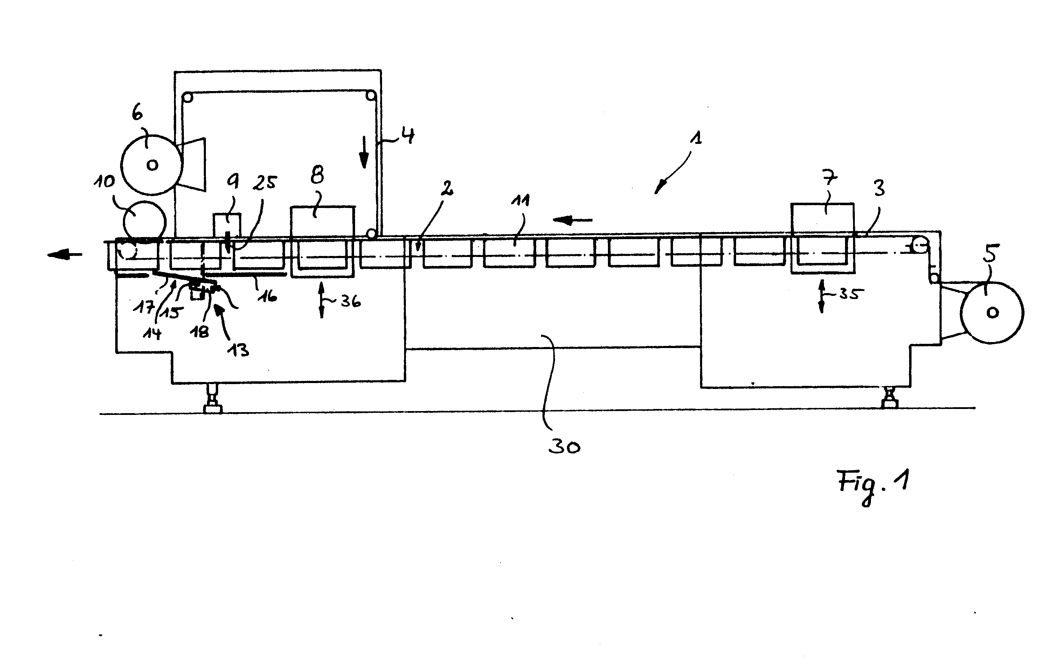

Die in Fig. 1 gezeigte Verpackungsmaschine weist ausgangsseitig von der Querschneideeinrichtung 9 eine Schutzein-

- 4 -

0138172

richtung 13 auf. Auf der Unterseite der Schneideeinrichtungen 9 und 10 sind plattenförmige Böden 16 in einem solchen Abstand von der Unterseite der Materialbahn 3 nach unten hin angeordnet, daß sie zusammen mit den Seitenwänden 31 und 32 einen Transportkanal 2 bilden, durch den die Behälter 11 gerade hindurchpassen. Der jeweilige ausgangsseitige Querschnitt dieses Transportkanales bildet einen Bereich 27. Ausgangsseitig von dem Bereich 27 weist die Schutzeinrichtung ein Element in Form einer Abdeckung 14 auf. Diese Abdeckung 14 ist um eine Achse 15 schwenkbar gelagert, welche von der Materialbahn 3 nach unten einen Abstand aufweist, der wenigstens gleich dem Abstand des Bodens 16 von der Materialbahn ist.

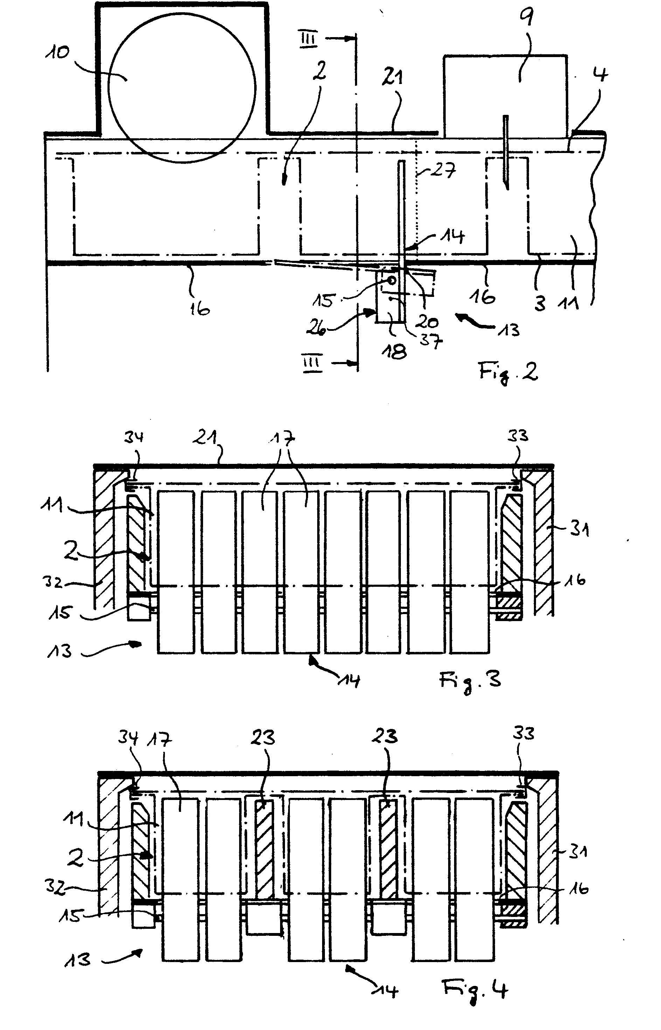

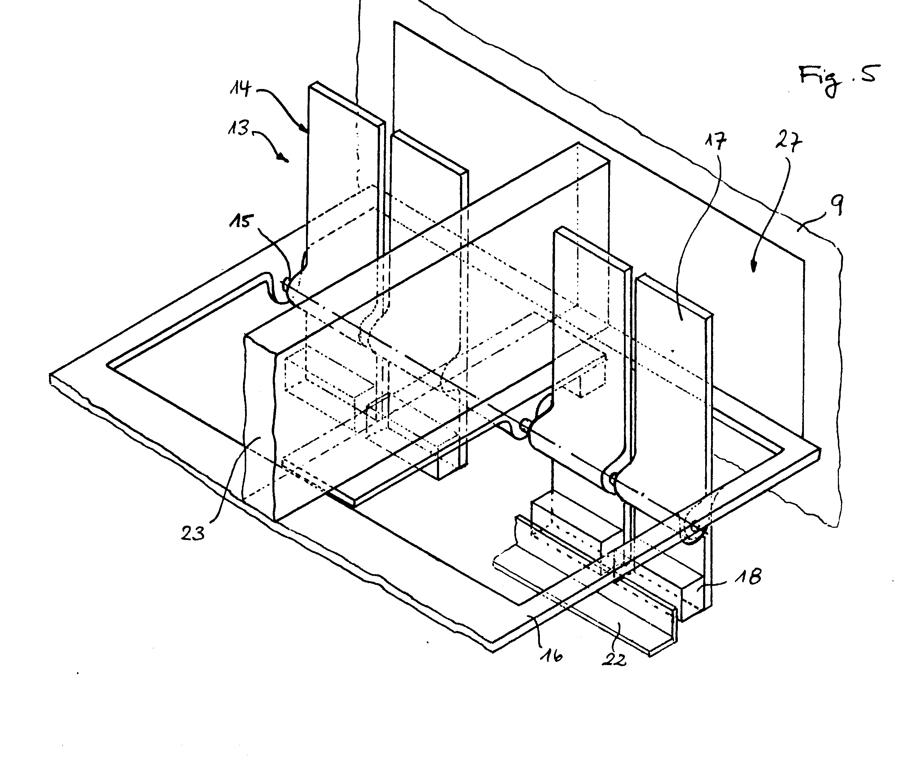

Die Abmessungen der Abdeckung 14 sind so gewählt, daß diese in den in den Fig. 2 bis 4 gezeigten Ausführungsformen in ihrer Projektion auf den Bereich 27 bis nahezu an die Unterseite der Materialbahn 3 reicht und sich in ihrer Breite so weit erstreckt, daß der Bereich 27 abgedeckt wird.

Die Abdeckung 14 ist in dem in Fig. 2 gezeigten bevorzugten Ausführungsbeispiel so ausgebildet, daß sie sich in ihrer Ruhestellung in der ausgezogen dargestellten Stellung befindet, in der sie sich im wesentlichen parallel zu dem Bereich 27 erstreckt. Auf der der Station 9 zugewandten Seite ist ein Anschlag 20 vorgesehen, an dem die Abdeckung 14 in der gezeigten ersten Stellung anschlägt, so daß die Bewegung zur Ruhestellung hin begrenzt ist. Die Abdeckung 14 weist eine solche Masseverteilung durch Anbringen eines Gegengewichtes 18 in der in Fig. 2 gezeigten Stellung unterhalb der Achse 15 auf, daß sich der Gesamtschwerpunkt 37 der Abdeckung 14 in vertikaler Richtung gesehen so viel tiefer befindet als die Achse 15, daß sich die Abdeckung 14 ohne Einwirkung zusätzlicher Kräfte nach Art eines Stehaufmännchens in die in Fig. 2 mit durchgezogenem Strich gezeichnete erste Stellung bewegt. Die Abdeckung 14 ist durch Einwirken einer Kraft in Richtung der Vorschubrichtung der Materialbahn aus ihrer gezeigten ersten Stellung in die in Fig. 2 gestrichelt gezeichnete zweite Stellung derart auslenkbar, daß sie den Bereich 27 des Transportkanales 2 freigibt.

Anstelle des Gegengewichtes 18 können auch andere Einrichtungen vorgesehen sein, die die Abdeckung 14 jeweils bei Wegfallen einer angreifenden äußeren Kraft in die erste Stellung zurückbewegen bzw. die Abdeckung in diese Stellung vorspannen. Die Ausbildung kann als Feder erfolgen, die in einem Abstand von der Achse 15 entsprechend an der Abdeckung 14 angreift. Ferner kann eine Ausrichtvorrichtung 26 in Form einer Luftdüse zum Anblasen der Abdeckung 14 in der Weise vorgesehen sein, daß diese in die erste Stellung gedrückt wird. Es kann auch ein Reibantrieb oder ein magnetischer Antrieb verwendet werden.

In einer anderen Ausführungsform kann die Abdeckung 14 auch so ausgebildet sein, daß sie aus einem flexiblen Material gebildet ist und unterhalb des Bodens 16 in der in Fig. 2 gezeigten Stellung eingespannt ist. Durch Einwirken einer Kraft in Vorschubrichtung der Materialbahn ist die Abdeckung so auslenkbar, daß der Bereich 27 freigegeben wird. Nach Wegfall der Kraft schnappt die Abdeckung in die gezeigte Ausgangsstellung zurück. Gegen eine Bewegung über die gezeigte erste Stellung hinaus zur Arbeitsstation 9 hin ist sie durch einen Anschlag gehindert.

Wie in den Figuren gezeigt, ist die Abdeckung 14 in Querrichtung zum Bereich 27 vorzugsweise in eine Mehrzahl von Teilelementen unterteilt. Die Teilelemente sind jeweils unabhängig von den benachbarten Teilelementen wie oben beschrieben in die erste Stellung vorausgerichtet und aus dieser durch Einwirken einer äußeren Kraft auslenkbar, indem für jedes Teilelement 17 ein Gegengewicht oder eine Feder oder ähnliches zum Rückstellen vorgesehen ist. Der Abstand benachbarter Teilelemente 17 voneinander ist so gewählt, daß eine Behinderung der Bewegung gegenseitig nicht erfolgt, daß aber andererseits ein Hindurchgreifen zwischen zwei Teilelementen nicht möglich ist. Die Unterteilung und damit die Anzahl der Teilelemente 17 richtet sich nach der Form der im Transportkanal 2 nebeneinander zu führenden Packungen. Sie wird so gewählt, daß in Fällen, in denen der Bereich 27 nicht vollständig durch Packungen ausgefüllt ist, Teilelemente 17 in der ersten Stellung die Bereiche auch bei Hindurchführen einer Packung abdecken, die nicht durch eine Verpackung ausgefüllt sind.

Werden mehrere Behälter 11 nebeneinander geformt und geführt, so können gemäß des Ausführungsbeispieles nach Fig. 4 zwischen den einzelnen Behältern Stützplatten 23 vorgesehen sein. Diese Stützplatten 23 können entweder zwischen einzelnen Teilelementen 17 angeordnet oder so ausgebildet sein, daß sie in den in den Fig. 4 und 5 gezeigten Weisen jeweils ein in die ausgelenkte Stellung bewegtes Teilelement 17 überdecken.

Die Teilelemente 17 sind insbesondere in der in Fig. 5 gezeigten Ausführungsform plattenförmig ausgebildet. Sie können stattdessen aber auch rohr- oder stabförmig ausgebildet sein.

Auf der Ausgangsseite der Querschneideeinrichtung 9 ist eine Schutzhaube 21 oberhalb der Materialbahn angeordnet, durch die ein Hineingreifen von oben verhindert werden soll. In einer abgewandelten Ausführungsform kann die Abdeckung 14 so lang ausgebildet sein, daß sie aus der ausgelenkten Stellung kommend an der Schutzhaube 21 zur Begrenzung eines Weiterbewegens über die erste Stellung hinaus anschlägt. In der in Fig. 5 gezeigten Ausführungsform ist der Anschlag 22 am unteren Ende der Abdeckung vorgesehen.

Im Betrieb befinden sich die Teileelemente 17 der Abdeckung 14 zunächst in der in Fig. 2 gezeigten Stellung. Sobald ein Behälter 11 an wenigstens eines der Teileelemente 17 anstößt, wird dieses in die gestrichelte Stellung so ausgelenkt, daß der Weg für den durchzuführenden Behälter freigegeben wird. Nur die Teileelemente 17 verbleiben in der ersten Stellung, die nicht von einem Behälter beaufschlagt werden. Dabei streifen die ausgelenkten Teileelemente 17 an der Unterseite des Behälters 11 entlang, so daß ein eventueller Zwischenraum zwischen dem Boden 16 des Transportkanales 2 und dem Boden des Behälters 11 abgedeckt bleibt. Sobald der Behälter 11 so weit vorbewegt ist, so daß er nicht mehr auf die durch ihn ausgelenkten Teileelemente 17 einwirkt, bewegen sich diese in die erste Stellung zurück und schließen den Bereich 27 erneut ab. Dadurch wird erreicht, daß auch an den Stellen nicht durch den Bereich 27 hindurch in die Station gefaßt werden kann.

In der oben beschriebenen Ausführungsform befindet sich die Schutzeinrichtung 13 ausgangsseitig vor der Querschneideeinrichtung 9. Derartige Schutzeinrichtungen können aber selbstverständlich auch ausgangsseitig vor allen anderen Arbeitsstationen angebracht sein.

0138172

Wird die Verpackungsmaschine 1 zu Testzwecken ohne Folie bzw. mit unverformten Folien betrieben, dann liegt je nach Länge der Abdeckung 14 das obere Ende derselben an der unverformten Folie bzw. an der Schutzhaube 21 an, wodurch sich die Abdeckung 14 in einer schrägen Zwischenstellung zwischen der ersten und der zweiten Stellung befindet, oder die Abdeckung 14 wird vom Gegengewicht 18 bis zum Anschlag 20 in die erste Stellung gedrückt. In beiden Fällen wird der Transportkanal gegen Eingreifen vom ausgangsseitigen Ende her gesperrt.

- 1 -

0138172

PATENTANSPRÜCHE

1. Verpackungsmaschine mit wenigstens einer Arbeitsstation und einer durch diese von einer Einlaufseite zu einer Auslaufseite hindurchführbaren Materialbahn mit einer Ober- und einer Unterseite und einer Schutzeinrichtung mit einem die Auslaufseite der Station gegen Hineingreifen sperrenden Element, dadurch gekennzeichnet, daß das Element (14) in einem Abstand von der Unterseite der Materialbahn (3) so angelenkt ist, daß es in einer ersten Stellung einen Bereich (27) der Arbeitsstation (9) unterhalb der Materialbahn abdeckt und in eine zweite Stellung in Vorschubrichtung zum Freigeben des Bereiches (27) auslenkbar ist.

2. Verpackungsmaschine nach Anspruch 1, dadurch gekennzeichnet, daß das Element (14) um eine unterhalb der Materialbahn (3) und in einem Abstand von dieser angeordnete Achse (15) schwenkbar ausgebildet ist.

3. Verpackungsmaschine nach Anspruch 1 oder 2, dadurch gekennzeichnet, daß ein Anschlag (20) zum Begrenzen der Schwenkung in eine Richtung entgegengesetzt zur Vorschubrichtung über die erste Stellung hinaus vorgesehen ist.

4. Verpackungsmaschine nach einem der Ansprüche 1 bis 3, dadurch gekennzeichnet, daß eine Ausrichteinrichtung (26) vorgesehen ist, die das Element (14) zum Anschlag (20) hin vorspannt.

5. Verpackungsmaschine nach Anspruch 4, dadurch gekennzeichnet, daß der Anschlag (20) unterhalb der Materialbahn (3) vorgesehen ist.

6. Verpackungsmaschine nach Anspruch 4,
dadurch gekennzeichnet, daß der Anschlag von einer die
Oberseite der Materialbahn (3) abdeckenden Schutzhaube
(21) gebildet ist.

7. Verpackungsmaschine nach einem der Ansprüche 2 bis 6,
dadurch gekennzeichnet, daß die Ausrichteinrichtung (26)
als ein mit dem Element (14) verbundenes Gegengewicht (18)
ausgebildet ist, das derart ausgebildet ist, daß es bei
Auslenkung des Elementes (14) aus seiner ersten Stellung
auf dieses ein Drehmoment zum Zurückschwenken in die erste
Stellungs ausübt.

8. Verpackungsmaschine nach einem der Ansprüche 2 bis 6,
dadurch gekennzeichnet, daß die Ausrichteinrichtung (26)
eine Feder aufweist.

9. Verpackungsmaschine nach einem der Ansprüche 2 bis 6,
dadurch gekennzeichnet, daß die Ausrichteinrichtung (26)
Luftdüsen zum Anblasen der Elemente (14) aufweist.

10. Verpackungsmaschine nach einem der Ansprüche 2 bis 6,
dadurch gekennzeichnet, daß die Ausrichteinrichtung (26)
einen an dem Element (14) angreifenden Reibantrieb aufweist.

11. Verpackungsmaschine nach einem der Ansprüche 2 bis 6,
dadurch gekennzeichnet, daß die Ausrichteinrichtung (26)
einen an dem Element (14) angreifenden Magnetantrieb aufweist.

0138172

Fig. 1

Fig. 2

Fig. 3

Fig. 4

Fig. 5